# EUROPEAN PATENT SPECIFICATION

(11) **EP 4 331 883 B1**
(45) Date of publication and mention of the grant of the patent: **17.06.2026**
(21) Application number: 22193708.9
(22) Date of filing: 02.09.2022
(51) Int. Cl.: B60J 7/08

(54) **ROLLABLE COVER SYSTEM FOR A TRANSPORT BODY**
ROLLBARES ABDECKSYSTEM FÜR EINEN TRANSPORTKÖRPER
SYSTÈME DE COUVERTURE ENROULABLE POUR UNE CAISSE DE TRANSPORT

(43) Date of publication of application: 06.03.2024
(73) Proprietor: G. J. Holding ApS, 8543 Hornslet (DK)
(72) Inventor: JENSEN, Jakob, 8380 Trige (DK)
(74) Representative: Patrade A/S

(56) References cited:
- EP-A2- 1 925 481
- EP-B1- 2 505 399
- CA-A1- 2 657 853
- SE-B- 404 915

## Description

### Field of the Invention

The present invention relates to a rollable cover system for covering an open top of a transport body.

### Background of the Invention

Covers for transport bodies are well-known in the art. Covers for transport bodies, such as a platform on a lorry, a trailer, a container, etc. are used for covering an open top of the transport body protecting or retaining the transported goods. It is often desirable to have an automated cover system that is easy to operate and install on the transport body.

Cover systems often apply methods for tightening the cover across the transport body that are prone to apply unequal tension to the attachment points in the cover causing local stress and inducing distortion across the cover. Thereby wearing the cover material and decreasing the durability of the cover.

One example of such method is a single rubber strap attached in a zig-zag pattern between the cover and the transport body. One reason for this method being prone to distortion is that the mounts about which the rubber strap is to be led are not installed in the correct positions.

Since cover systems for transport bodies often cover a relatively long area, it is difficult and time consuming to ensure that the cover is not distorted, and the problem might originate from the installation of the cover system which is difficult to correct.

EP2505399B1 describes a cover for a transport body, where the cover is capable of being rolled up around a shaft by opening, the shaft interacting with at least one hydraulic cylinder which by means of pivotable arms forces the shaft to perform a curving movement above the transport body, where the shaft is connected with rotary means that rotate the shaft during the curving movement. The cover is formed by a segmented tarpaulin where the individual tarpaulin parts are secured by using elastic rubber straps mounted in a zig-zag pattern.

The problem with present day cover systems is that distortion across the cover inflicted by the method of tightening to the transport body, is of great significance as continued distortion wears the cover material quicker and decreases the durability of the cover.

There is a need in the art for a cover system with a method for tightening the cover across the transport body that is easy to apply without distorting the cover.

### Object of the Invention

The object of the invention is to provide a cover system for a transport body with a method for tightening the cover across the transport body that minimizes the risk of distorting the cover. Thereby decreasing the wear on the cover and increasing the durability of the cover.

### Description of the Invention

The object of the invention can be achieved by a rollable cover system for a transport body. The transport body comprises a first side panel that is substantially parallel to a second side panel and an open top.

The rollable cover system for covering the open top of the transport body is displaced between an open position where the open top is exposed and closed position where the open top is covered.

The rollable cover system comprises a displaceable shaft that defines a longitudinal axis, and a pivotable arm that is configured for displacing the displaceable shaft between the two side panels of the transport body.

The displaceable shaft faces the first side panel when positioned in the open position. The displaceable shaft faces the second side panel when positioned in the closed position.

The rollable cover system further comprises a cover that is attached to the first side panel and the displaceable shaft, and a rotary mechanism that is configured for rotating the displaceable shaft about the longitudinal axis. Thereby rolling and unrolling the cover when displacing the displaceable shaft between the open position and the closed position.

The rollable cover system further comprises a plurality of elastic straps that is attached to the first side panel and connected to a sleeve. The elastic straps are attached to the first side panel below the attachment of the cover to the first side panel. The sleeve is further connected to the cover, thereby creating a biasing force towards the first side panel.

The transport body may be a platform on a lorry, a trailer, or a container.

When positioned in the open position the rollable cover system is rolled up thereby exposing the open top of the transport body. The transport body will be able to be loaded or unloaded when in the open position.

When positioned in the closed position the rollable cover system is unrolled thereby covering the open top of the transport body. The loaded goods in the transport body are retained and/or protected under transportation when in the closed position.

The displaceable shaft may be connected to the pivotable arm.

The rotary mechanism may be connected to the displaceable shaft.

A person skilled in the art would know how to choose a rotary mechanism that can rotate the displaceable shaft about the longitudinal axis. The rotary mechanism could be a reel arrangement for winding a wire on and off the displaceable shaft.

**In** some embodiments, the cover and the sleeve may be made of the same material.

The biasing force on the cover applied by the elastic straps and the sleeve may ensure that the cover is tightened across the transport body.

The effect of this is that a self-tightened action of the cover across the transport body is achieved.

An advantage of a tight cover is that it does not flutter under transportation which ensures a reduced fuel consumption and thereby a reduced CO₂ emission. It also increases the durability of the cover.

In one aspect of the invention, the cover may be attached along the top of the first side panel.

An advantage of this is that a minimum of space between the cover and the first side panel is formed. A large space between the cover and the first side panel would allow spillage from loading of the transport body to be trapped in this space. The spillage will increase wear on a vulnerable part of the cover system, which is the connection between the cover and the first side panel. The rollable cover system may have a length of 10 m and thus the spillage may weight 100 kg or more along the cover.

In some embodiments, the cover may be riveted to the first side panel.

The effect is that the cover is quickly and permanently mounted to the first side panel.

In some embodiments, the cover may be sled into a groove of a track that is mounted to the first side panel.

An advantage of this attachment method is that local stresses on the cover is avoided thereby increasing the durability of the cover. Another advantage of this attachment method is that it is easy to change the cover to a new cover when it e.g., is worn out.

In one aspect of the invention, the cover may have a width from the attachment of the cover at the first side panel to the displaceable shaft in the closed position that is greater than the distance between the two side panels.

Thereby a fold in the cover may be created between the connection of the cover with the sleeve and the first side panel when the sleeve is extended towards the first side panel.

The sleeve may be connected to the cover along the fold and placed on top of the cover, such that the sleeve covers the fold.

An advantage of this is that the fold is shielded from water, snow, etc. that could accumulate in the fold and apply additional weight to the cover. The additional weight might wear on the rollable cover system and decrease its durability.

The extended sleeve may be secured in the extended position by the plurality of elastic straps connected to the first side panel.

An advantage of this is that the cover becomes flexible towards e.g., a heaped load on the transport body. The cover becomes flexible in that the elastic straps and the fold may be extended such that an extension of the cover is provided. Thereby accommodating to the additional height of the heaped load.

A person skilled in the art would know how to choose the optimal width for the cover to accommodate the expected maximum heaped load.

In some embodiments, the width of the cover may allow a heaped load height of 35 cm.

In one aspect of the invention, the plurality of elastic straps may be separately inserted into holes in the sleeve. The elastic straps may further be attached to the first side panel substantially parallel to each other.

An advantage of this is that the elastic straps exert equal tension along the cover thereby minimising local stress and increasing the durability of the cover.

The elastic straps may be attached to the first side panel along the transport body.

In one aspect of the invention, the holes in the sleeve may be horizontally elongated.

An advantage of this is that the elastic straps are easily inserted into the holes.

The holes in the sleeve may be evenly distributed along the sleeve.

In some embodiments, the holes have a horizontal diameter of 4 cm and a vertical diameter of 2 cm.

In one aspect of the invention, the plurality of elastic straps may be made of natural rubber.

An advantage of this is that natural rubber is the most wear-resistant and elastic choice of material for the elastic straps.

The displaceable shaft comprises a groove in the displaceable shaft for attaching the cover. The displaceable shaft further comprises a tailpiece and a gasket for sealing the cover. The tailpiece lies down the side of the second side panel when in the closed position, and the gasket may press against the top of the second side panel when in the closed position.

An advantage of this is that the weakest joint of the rollable cover system, that is between the cover and the second side panel, becomes wind and waterproof.

In some embodiments, the groove may have an extruded tubular profile.

In some embodiments, the shaft may be made of aluminium, metal, or plastic.

In one aspect of the invention, each end of the displaceable shaft may be attached to a rotary mechanism and seated in a pivotable arm.

In one aspect of the invention, the pivotable arm may be connected to a hydraulic cylinder.

An advantage of this is that the rollable cover system may be automatically operated.

In one aspect of the invention, the pivotable arm may pivot the displaceable shaft 180 degrees between the two side panels.

In one aspect of the invention, the pivotable arm may be a two-piece gear arm.

The two-piece gear arm may comprise a first arm section that is attached to the transport body at a first rotation point around which the displaceable shaft is pivoted, and a second arm section that has a teethed end and is attached to the first arm section at a second rotation point.

The two-piece gear arm may further comprise a gear that is rotatably engaged with the hydraulic cylinder, the first arm section at an attachment point located between the first and second rotation point, and the teethed end of the second arm section.

The teethed end may be furthest away from the transport body when in the open position.

An advantage of this is that the two-piece gear arm may be attached to the transport body at the same level as the hydraulic cylinder.

In one aspect of the invention, the rollable cover system may be configured such that it can be mounted at a level on the transport body which will enable opening of the transport body at a rear end.

Thereby ensuring that goods can be unloaded through the rear end of the transport body, or in general ensuring that there is unhindered access to the transport body.

### Description of the Drawing

Embodiments of the invention will be described in the figures, whereon:
- Fig. 1: shows a perspective view of a transport body fitted with a rollable cover system according to the invention;
- Fig. 2: shows the rollable cover system in the closed position with the preferred attachment of the cover and sleeve to a transport body;
- Fig. 3: shows a side view of the first side panel of a transport body with the rollable cover system in the closed position;
- Fig. 4: shows a section of the displaceable shaft.
- Fig. 5: shows a rear view of a transport body with the displaceable shaft in the closed position;
- Fig. 6: shows a rear view of a transport body with the displaceable shaft in the open position;
- Fig. 7: shows a rear view of a transport body with the displaceable shaft in a position between the open and closed position;
- Fig. 8: shows the engagement between the two-piece gear arm and the hydraulic cylinder;

### Detailed Description of the Invention

| **Item** | **No** |
|---|---|
| Rollable cover system | 10 |
| Cover | 12 |
| Sleeve | 14 |
| Holes | 15 |
| Elastic straps | 16 |
| Fold | 18 |
| Transport body | 20 |
| First side panel | 22a |
| Second side panel | 22b |
| Open top | 24 |
| Rear end | 26 |
| Displaceable shaft | 30 |
| Longitudinal axis | 32 |
| Groove | 34 |
| Tailpiece | 36 |
| Gasket | 38 |
| Rotary mechanism | 50 |
| Pivotable arm | 60 |
| Two-piece gear arm | 61 |
| First arm section | 62 |
| First rotation point | 63 |
| Second arm section | 64 |
| Teethed end | 65 |
| Second rotation point | 66 |
| Gear | 67 |
| Attachment point | 68 |
| Hydraulic cylinder | 70 |
| Open position | 100 |
| Closed position | 110 |

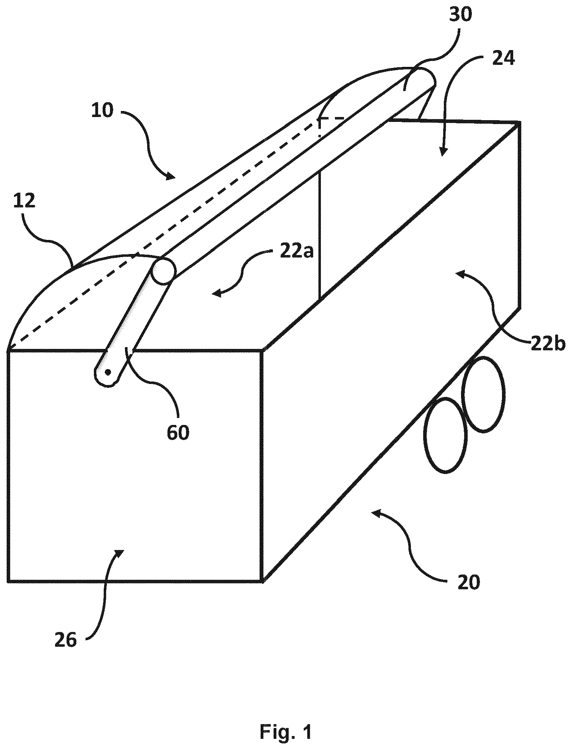

Figure 1 discloses a perspective view of a transport body 20 fitted with a rollable cover system 10 according to the invention. The transport body 20 comprises a first side panel 22a substantially parallel to a second side panel 22b, an open top 24 and a rear end 26. The rollable cover 10 for covering the open top 24 comprises a displaceable shaft 30 with each end seated in a pivotable arm 60, and a cover 12 attached to the first side panel 22a and the displaceable shaft 30. The displaceable shaft 30 is displaceable between the first and second side panel 22a, 22b

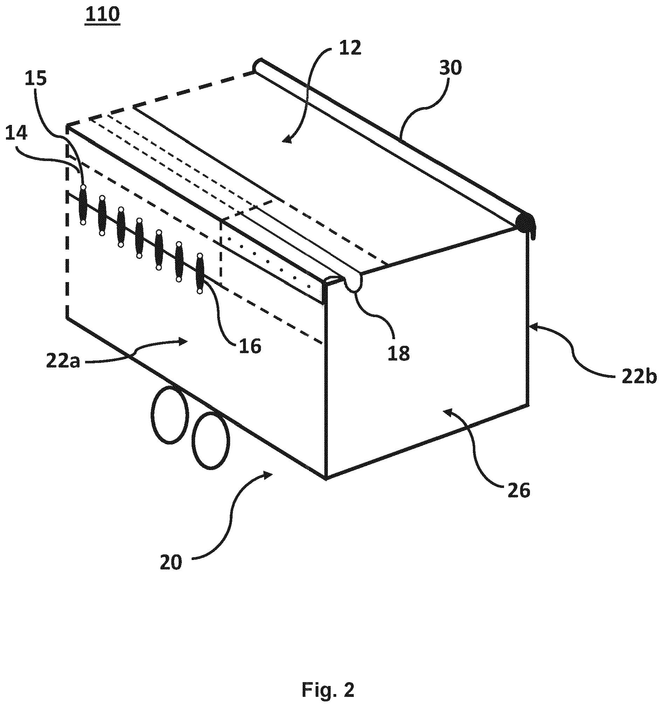

Figure 2 shows a perspective view of the rollable cover system 10 in a closed position 110, where the displaceable shaft 30 faces the second side panel 22b and the cover 12 coves the open top 24. The cover 12 is attached along the top of the first side panel 22a, and a sleeve 14 with holes 15 is connected to the cover 12. The sleeve is illustrated as see-through in figure 2. A plurality of elastic straps 16 are inserted through the holes 15 in the sleeve 14 and attached to the first side panel 22a substantially parallel to each other below the attachment of the cover 12 to the first side panel 22a. The elastic straps 16 exerts equal tension along the cover 12, thereby creating a biasing force towards the first side panel 22a creating a fold 18 in the cover 12 between the connection of the cover 12 with the sleeve 14 and the first side panel 22a.

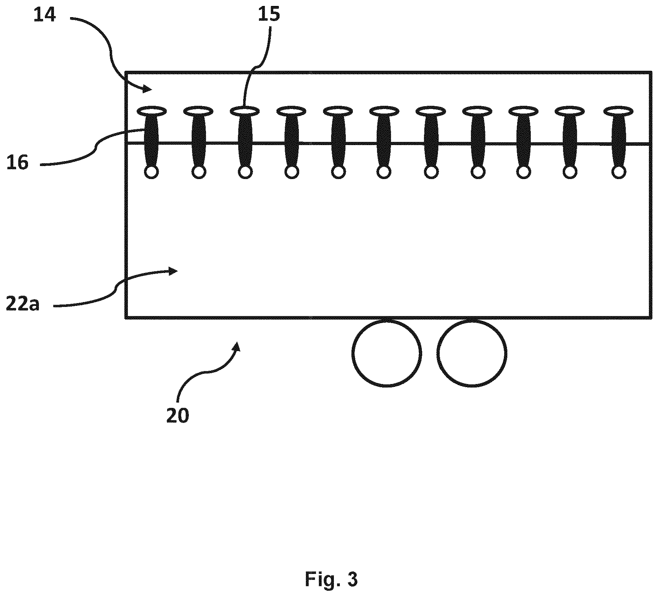

Figure 3 shows a side view of the first side panel 22a of a transport body 20 with the rollable cover system 10 in the closed position 110. The holes 15 in the sleeve 14 are horizontally elongated and placed along the sleeve 14. The elastic straps 16 are easily inserted into the horizontally elongated holes 15 and attached to the first side panel 22a substantially parallel to each other.

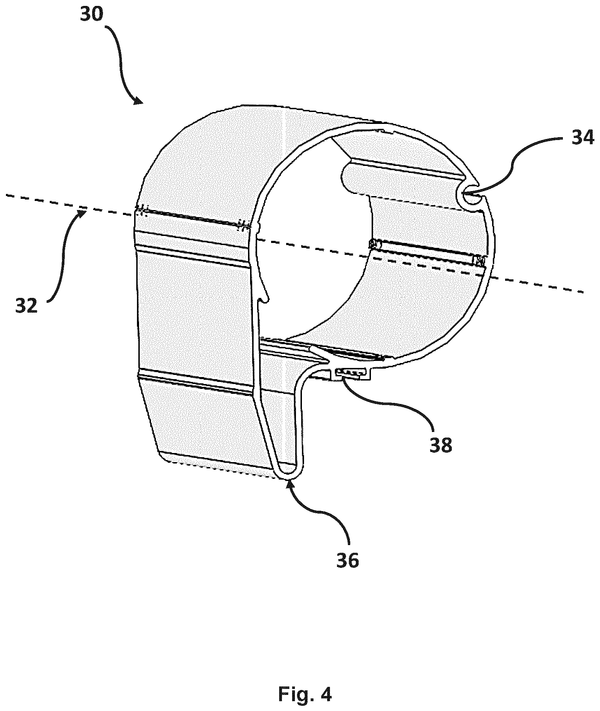

Figure 4 shows a section of the displaceable shaft 30. The displaceable shaft 30 defines a longitudinal axis 32 and comprises a groove 34 for attaching the cover 12, and a tailpiece 36 and a gasket 38 for sealing the cover 12 in the closed position 110.

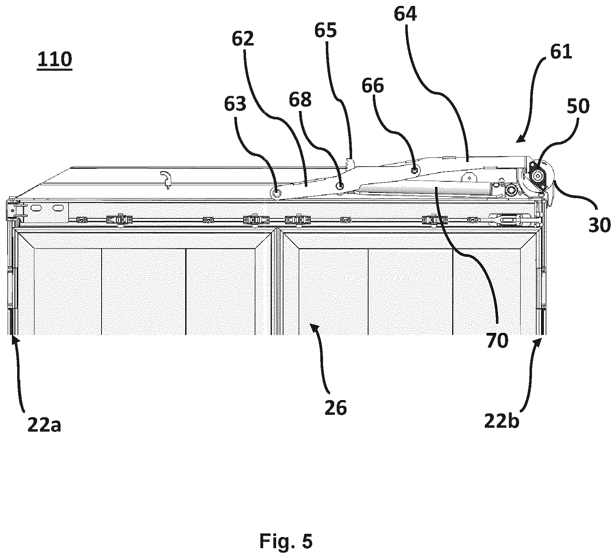

Figure 5 shows a rear view of a transport body 20 with the displaceable shaft 30 in the closed position 110. In the closed position 110 the displaceable shaft 30 faces the second side panel 22b with the gasket 38 pressing against the top and the tailpiece 36 lying down the side of the second side panel 22b.

Each end of the displaceable shaft 30 is attached to a rotary mechanism 50 configured for rotating the displaceable shaft 30 about the longitudinal axis 32 for rolling and unrolling the cover 12 when displacing the displaceable shaft 30 between the open and closed position 100,110.

The pivotable arm 60 displacing the displaceable shaft 30 is a two-piece gear arm 61 comprising a first arm section 62 attached to the transport body 20 at a first rotation point 63 and a second arm section 64 with a teethed end 65 attached to the first arm section 62 at a second point of rotation 66. The two-piece gear arm 61 further comprises a gear 67 rotatably engaged with a hydraulic cylinder 70, the teethed end 65 of the second arm section 64, and the first arm section 62 at an attachment point 68 between the first and second rotation point 63,66.

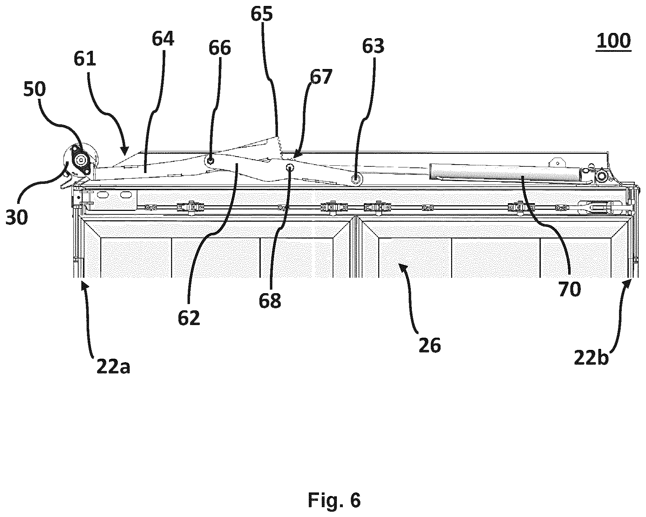

Fig. 6 shows a rear view of a transport body 20 with the displaceable shaft 30 in the open position 100. In the open position 100 the displaceable shaft 30 faces the first side panel 22a with the gasket 38 and the tailpiece 36 facing away from the first side panel 22a.

Each end of the displaceable shaft 30 is attached to a rotary mechanism 50 configured for rotating the displaceable shaft 30 about the longitudinal axis 32 for rolling and unrolling the cover 12 when displacing the displaceable shaft 30 between the open and closed position 100,110.

The pivotable arm 60 displacing the displaceable shaft 30 is a two-piece gear arm 61 comprising a first arm section 62 attached to the transport body 20 at a first rotation point 63 and a second arm section 64 with a teethed end 65 attached to the first arm section 62 at a second point of rotation 66. The two-piece gear arm 61 further comprises a gear 67 rotatably engaged with a hydraulic cylinder 70, the teethed end 65 of the second arm section 64, and the first arm section 62 at an attachment point 68 between the first and second rotation point 63,66.

The teethed end 65 is furthest away from the transport body 20 when positioned in the open position 100.

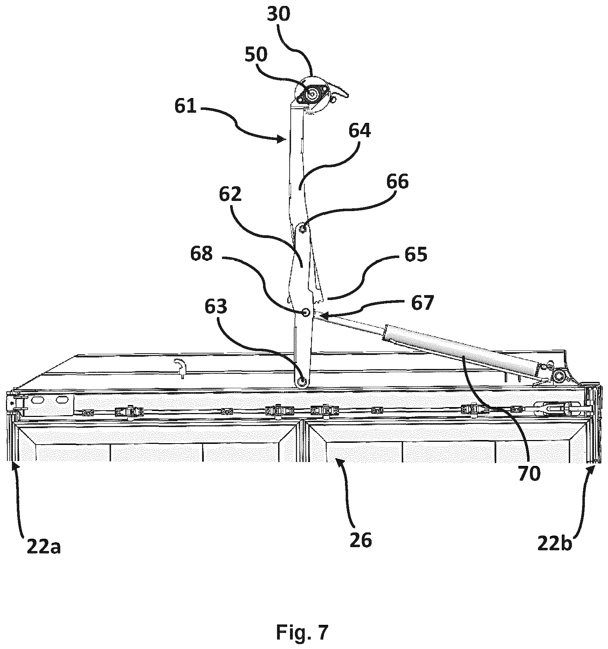

Fig.7 shows a rear view of a transport body 20 with the displaceable shaft 30 in a position between the open and closed position 100, 110.

Each end of the displaceable shaft 30 is attached to a rotary mechanism 50 configured for rotating the displaceable shaft 30 about the longitudinal axis 32 for rolling and unrolling the cover 12 when displacing the displaceable shaft 30 between the open and closed position 100,110.

The pivotable arm 60 displacing the displaceable shaft 30 is a two-piece gear arm 61 comprising a first arm section 62 attached to the transport body 20 at a first rotation point 63 and a second arm section 64 with a teethed end 65 attached to the first arm section 62 at a second point of rotation 66. The two-piece gear arm 61 further comprises a gear 67 rotatably engaged with a hydraulic cylinder 70, the teethed end 65 of the second arm section 64, and the first arm section 62 at an attachment point 68 between the first and second rotation point 63,66.

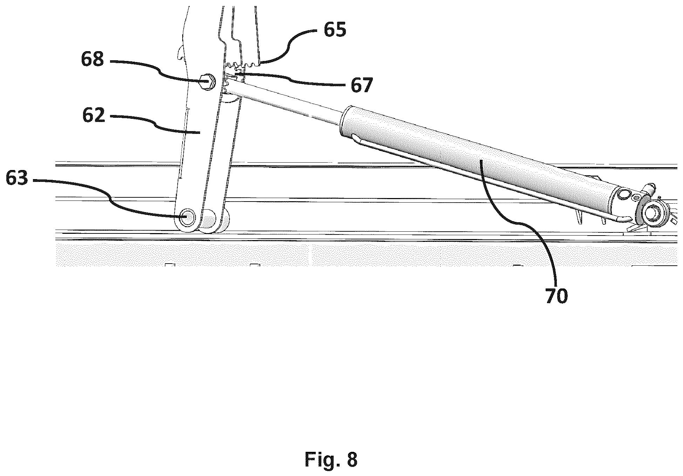

Fig. 8 shows the engagement between the two-piece gear arm 61 and the hydraulic cylinder 70. The gear 67 is rotatably engaged with a hydraulic cylinder 70, the teethed end 65 of the second arm section 64, and the first arm section 62 at an attachment point 68 between the first and second rotation point 63,66.

## Claims

1. A rollable cover system (10) for a transport body (20) having a first side panel (22a) substantially parallel to a second side panel (22b), and an open top (24),
the rollable cover system (10) for covering the open top (24) being displaceable between
- an open position (100) where the open top (24) is exposed,
- a closed position (110) where the open top (24) is covered,
the rollable cover system (10) comprising
- a displaceable shaft (30) defining a longitudinal axis (32), comprising a groove (34) in the displaceable shaft (30) for attaching the cover (12),
- a pivotable arm (60) configured for displacing the displaceable shaft (30) between the side panels (22a, 22b), wherein the displaceable shaft (30) faces the first side panel (22a) when in the open position (100) and the displaceable shaft (30) faces the second side panel (22b) when in the closed position (110),
- a cover (12) attached to the first side panel (22a) and attached to the displaceable shaft (30),
- a rotary mechanism (50) configured for rotating the displaceable shaft (30) about the longitudinal axis (32) for rolling and unrolling the cover (12) when displacing the displaceable shaft (30) between the open position (100) and the closed position (110),
- a plurality of elastic straps (16) attached to the first side panel (22a) below the attachment of the cover (12) to the first side panel (22a) and connected to a sleeve (14), the sleeve (14) being connected to the cover (12) for creating a biasing force towards the first side panel (22a).
**characterised in that** the displaceable shaft (30) comprises
- a tailpiece (36) lying down the side of the second side panel (22b) in the closed position (110) and a gasket (38) pressing against the top of the second side panel (22b) in the closed position (110) for sealing the cover (12).

2. The rollable cover system (10) according to claim 1, **characterised in that** the cover (12) is attached along the top of the first side panel (22a).

3. The rollable cover system (10) according to one or more of claims 1-2, **characterised in that** the cover (12) has a width from the attachment of the cover (12) at the first side panel (22a) to the displaceable shaft (30) in the closed position (110) greater than the distance between the side panels (22a, 22b), such that a fold (18) in the cover (12) is created between the connection of the cover (12) with sleeve (14) and the first side panel (22a) when extending the sleeve (14) towards the first side panel (22a).

4. The rollable cover system (10) according to one or more of claims 1-3, **characterised in that** the plurality of elastic straps (16) separately inserted into holes (15) in the sleeve (14) and attached to the first side panel (22a) substantially parallel to each other.

5. The rollable cover system (10) according to claim 4, **characterised in that** the holes (15) in the sleeve (14) are horizontally elongated.

6. The rollable cover system (10) according to one or more of claims 1-5, **characterised in that** the plurality of elastic straps (16) are made of natural rubber.

7. The rollable cover system (10) according to one or more of claims 1-6, **characterised in that** each end of the displaceable shaft (30) is attached to a rotary mechanism (50) and seated in a pivotable arm (60).

8. The rollable cover system (10) according to one or more of claims 1-7, **characterised in that** the pivotable arm (60) is connected to a hydraulic cylinder (70).

9. The rollable cover system (10) according to claim 8, **characterised in that** the pivotable arm (60) is a two-piece gear arm (61), the two-piece gear arm (61) comprises
- a first arm section (62) attached to the transport body (20) at a first rotation point (63) around which the displaceable shaft (30) is pivoted,
- a second arm section (64) having a teethed end (65) and being attached to the first arm section (62) at a second rotation point (66),
- a gear (67) rotatably engaged with the hydraulic cylinder (70), the first arm section (62) at an attachment point (68) between the first and second rotation point (63, 66) and the teethed end (65), the teethed end (65) being furthest away from the transport body (20) when in the open position (100).

10. The rollable cover system (10) according to one or more of claims 1-9, **characterised in that** the pivotable arm (60) pivots the displaceable shaft (30) 180 degrees between the side panels (22a, 22b).

11. The rollable cover system (10) according to one or more of claims 1-10, **characterised in that** the rollable cover system (10) is configured such that it can be mounted at a level on the transport body (20) which will enable opening of the transport body (20) at a rear end (26).

## Patentansprüche

1. Rollbares Abdecksystem (10) für einen Transportkörper (20), der eine erste Seitenwand (22a), die im Wesentlichen parallel zu einer zweiten Seitenwand (22b) ist, und eine offene Oberseite (24) aufweist,
wobei das rollbare Abdecksystem (10) zum Abdecken der offenen Oberseite (24) zwischen
- einer offenen Position (100), in der die offene Oberseite (24) freiliegt,
- einer geschlossenen Position (110), in der die offene Oberseite (24) abgedeckt ist, verschiebbar ist,
wobei das rollbare Abdecksystem (10) umfasst
- eine verschiebbare Welle (30), die eine Längsachse (32) definiert, umfassend eine Nut (34) in der verschiebbaren Welle (30) zum Befestigen der Abdeckung (12),
- einen schwenkbaren Arm (60), der zum Verschieben der verschiebbaren Welle (30) zwischen den Seitenwänden (22a, 22b) konfiguriert ist, wobei die verschiebbare Welle (30) der ersten Seitenwand (22a) zugewandt ist, wenn sie sich in der offenen Position (100) befindet, und die verschiebbare Welle (30) der zweiten Seitenwand (22b) zugewandt ist, wenn sie sich in der geschlossenen Position (110) befindet,
- eine Abdeckung (12), die an der ersten Seitenwand (22a) befestigt ist und an der verschiebbaren Welle (30) befestigt ist,
- einen Drehmechanismus (50), der zum Drehen der verschiebbaren Welle (30) um die Längsachse (32) zum Aufrollen und Abrollen der Abdeckung (12) konfiguriert ist, wenn die verschiebbare Welle (30) zwischen der offenen Position (100) und der geschlossenen Position (110) verschoben wird,
- eine Vielzahl von elastischen Riemen (16), die an der ersten Seitenwand (22a) unterhalb der Befestigung der Abdeckung (12) an der ersten Seitenwand (22a) befestigt sind und mit einer Hülse (14) verbunden sind, wobei die Hülse (14) mit der Abdeckung (12) zum Erzeugen einer Vorspannkraft in Richtung der ersten Seitenwand (22a) verbunden ist.
**dadurch gekennzeichnet, dass** die verschiebbare Welle (30) umfasst
- ein Endstück (36), das in der geschlossenen Position (110) an der Seite der zweiten Seitenwand (22b) anliegt, und eine Dichtung (38), die in der geschlossenen Position (110) gegen die Oberseite der zweiten Seitenwand (22b) drückt, um die Abdeckung (12) abzudichten.

2. Rollbares Abdecksystem (10) nach Anspruch 1, **dadurch gekennzeichnet, dass** die Abdeckung (12) entlang der Oberseite der ersten Seitenwand (22a) befestigt ist.

3. Rollbares Abdecksystem (10) nach einem oder mehreren der Ansprüche 1-2, **dadurch gekennzeichnet, dass** die Abdeckung (12) eine Breite von der Befestigung der Abdeckung (12) an der ersten Seitenwand (22a) bis zu der verschiebbaren Welle (30) in der geschlossenen Position (110) aufweist, die größer als der Abstand zwischen den Seitenwänden (22a, 22b) ist, so dass eine Falte (18) in der Abdeckung (12) zwischen der Verbindung der Abdeckung (12) mit der Hülse (14) und der ersten Seitenwand (22a) erzeugt wird, wenn die Hülse (14) in Richtung der ersten Seitenwand (22a) ausgefahren wird.

4. Rollbares Abdecksystem (10) nach einem oder mehreren der Ansprüche 1-3, **dadurch gekennzeichnet, dass** die Vielzahl von elastischen Riemen (16) separat in Löcher (15) in die Hülse (14) eingesetzt sind und im Wesentlichen parallel zueinander an der ersten Seitenwand (22a) befestigt sind.

5. Rollbares Abdecksystem (10) nach Anspruch 4, **dadurch gekennzeichnet, dass** die Löcher (15) in der Hülse (14) horizontal langgestreckt sind.

6. Rollbares Abdecksystem (10) nach einem oder mehreren der Ansprüche 1-5, **dadurch gekennzeichnet, dass** die Vielzahl von elastischen Riemen (16) aus Naturkautschuk hergestellt sind.

7. Rollbares Abdecksystem (10) nach einem oder mehreren der Ansprüche 1-6, **dadurch gekennzeichnet, dass** jedes Ende der verschiebbaren Welle (30) an einem Drehmechanismus (50) befestigt ist und in einem schwenkbaren Arm (60) sitzt.

8. Rollbares Abdecksystem (10) nach einem oder mehreren der Ansprüche 1-7, **dadurch gekennzeichnet, dass** der schwenkbare Arm (60) mit einem Hydraulikzylinder (70) verbunden ist.

9. Rollbares Abdecksystem (10) nach Anspruch 8, **dadurch gekennzeichnet, dass** der schwenkbare Arm (60) ein zweiteiliger Getriebearm (61) ist, wobei der zweiteilige Getriebearm (61) umfasst:
- einen ersten Armabschnitt (62), der an dem Transportkörper (20) an einem ersten Drehpunkt (63) befestigt ist, um den die verschiebbare Welle (30) geschwenkt wird,
- einen zweiten Armabschnitt (64), der ein gezahntes Ende (65) aufweist und an dem ersten Armabschnitt (62) an einem zweiten Drehpunkt (66) befestigt ist,
- ein Zahnrad (67), das mit dem Hydraulikzylinder (70), dem ersten Armabschnitt (62) an einem Befestigungspunkt (68) zwischen dem ersten und dem zweiten Drehpunkt (63, 66) und dem gezahnten Ende (65) in drehbarem Eingriff steht, wobei das gezahnte Ende (65) in der offenen Position (100) am weitesten von dem Transportkörper (20) entfernt ist.

10. Rollbares Abdecksystem (10) nach einem oder mehreren der Ansprüche 1-9, **dadurch gekennzeichnet, dass** der schwenkbare Arm (60) die verschiebbare Welle (30) um 180 Grad zwischen den Seitenwänden (22a, 22b) schwenkt.

11. Rollbares Abdecksystem (10) nach einem oder mehreren der Ansprüche 1-10, **dadurch gekennzeichnet, dass** das rollbare Abdecksystem (10) so konfiguriert ist, dass es in einer Höhe an dem Transportkörper (20) montiert werden kann, die ein Öffnen des Transportkörpers (20) an einem hinteren Ende (26) ermöglicht.

## Revendications

1. Système de capot enroulable (10) pour une caisse de transport (20) ayant un premier panneau latéral (22a) sensiblement parallèle à un second panneau latéral (22b) et un dessus ouvert (24),
le système de capot enroulable (10) pour recouvrir le dessus ouvert (24) étant déplaçable entre
- une position ouverte (100) où le dessus ouvert (24) est exposé,
- une position fermée (110) où le dessus ouvert (24) est recouvert,
le système de capot enroulable (10) comprenant
- un arbre déplaçable (30) définissant un axe longitudinal (32), comprenant une rainure (34) dans l'arbre déplaçable (30) pour fixer le capot (12),
- un bras pivotant (60) configuré pour déplacer l'arbre déplaçable (30) entre les panneaux latéraux (22a, 22b), dans lequel l'arbre déplaçable (30) fait face au premier panneau latéral (22a) lorsqu'il est dans la position ouverte (100) et l'arbre déplaçable (30) fait face au second panneau latéral (22b) lorsqu'il est dans la position fermée (110),
- un capot (12) fixé au premier panneau latéral (22a) et fixé à l'arbre déplaçable (30),
- un mécanisme rotatif (50) configuré pour entraîner en rotation l'arbre déplaçable (30) autour de l'axe longitudinal (32) pour enrouler et dérouler le capot (12) lors du déplacement de l'arbre déplaçable (30) entre la position ouverte (100) et la position fermée (110),
- une pluralité de sangles élastiques (16) fixées au premier panneau latéral (22a) sous la fixation du capot (12) au premier panneau latéral (22a) et reliées à un manchon (14), le manchon (14) étant relié au capot (12) pour créer une force de rappel vers le premier panneau latéral (22a).
**caractérisé en ce que** l'arbre déplaçable (30) comprend
- une pièce de queue (36) reposant sur le côté du second panneau latéral (22b) dans la position fermée (110) et un joint (38) pressant contre le dessus du second panneau latéral (22b) dans la position fermée (110) pour sceller le capot (12).

2. Système de capot enroulable (10) selon la revendication 1, **caractérisé en ce que** le capot (12) est fixé le long du dessus du premier panneau latéral (22a).

3. Système de capot enroulable (10) selon une ou plusieurs des revendications 1 à 2, **caractérisé en ce que** le capot (12) a une largeur, de la fixation du capot (12) au premier panneau latéral (22a) à l'arbre déplaçable (30) dans la position fermée (110), supérieure à la distance entre les panneaux latéraux (22a, 22b), de telle sorte qu'un pli (18) dans le capot (12) est créé entre la liaison du capot e (12) avec le manchon (14) et le premier panneau latéral (22a) lors de l'extension du manchon (14) vers le premier panneau latéral (22a).

4. Système de capot enroulable (10) selon une ou plusieurs des revendications 1 à 3, **caractérisé en ce que** la pluralité de sangles élastiques (16) insérées séparément dans des trous (15) dans le manchon (14) et fixées au premier panneau latéral (22a) sensiblement parallèles les unes aux autres.

5. Système de capot enroulable (10) selon la revendication 4, **caractérisé en ce que** les trous (15) dans le manchon (14) sont allongés horizontalement.

6. Système de capot enroulable (10) selon une ou plusieurs des revendications 1 à 5, **caractérisé en ce que** la pluralité de sangles élastiques (16) sont constituées de caoutchouc naturel.

7. Système de capot enroulable (10) selon une ou plusieurs des revendications 1 à 6, **caractérisé en ce que** chaque extrémité de l'arbre déplaçable (30) est fixée à un mécanisme rotatif (50) et logée dans un bras pivotant (60).

8. Système de capot enroulable (10) selon une ou plusieurs des revendications 1 à 7, **caractérisé en ce que** le bras pivotant (60) est relié à un vérin hydraulique (70).

9. Système de capot enroulable (10) selon la revendication 8, **caractérisé en ce que** le bras pivotant (60) est un bras d'engrenage en deux parties (61), le bras d'engrenage en deux parties (61) comprenant
- une première section de bras (62) fixée à la caisse de transport (20) au niveau d'un premier point de rotation (63) autour duquel l'arbre déplaçable (30) est pivoté,
- une seconde section de bras (64) ayant une extrémité dentée (65) et étant fixée à la première section de bras (62) au niveau d'un second point de rotation (66),
- un engrenage (67) en prise de manière rotative avec le vérin hydraulique (70), la première section de bras (62) au niveau d'un point de fixation (68) entre le premier et le second point de rotation (63, 66) et l'extrémité dentée (65), l'extrémité dentée (65) étant la plus éloignée de la caisse de transport (20) lorsqu'elle est dans la position ouverte (100).

10. Système de capot enroulable (10) selon une ou plusieurs des revendications 1 à 9, **caractérisé en ce que** le bras pivotant (60) fait pivoter l'arbre déplaçable (30) de 180 degrés entre les panneaux latéraux (22a, 22b).

11. Système de capot enroulable (10) selon une ou plusieurs des revendications 1 à 10, **caractérisé en ce que** le système de capot enroulable (10) est configuré de telle sorte qu'il peut être monté à un niveau sur la caisse de transport (20) qui permettra l'ouverture de la caisse de transport (20) au niveau d'une extrémité arrière couver(26).
